Europäisches Patentamt

European Patent Office

Office européen des brevets

(19)

(11) Veröffentlichungsnummer : **0 168 624**
**B1**

(12) **EUROPÄISCHE PATENTSCHRIFT**

(45) Veröffentlichungstag der Patentschrift :
09.09.87

(51) Int. Cl.⁴ : **C 09 J  7/02**

(21) Anmeldenummer : **85107058.1**

(22) Anmeldetag : **07.06.85**

---

(54) **Klebeband.**

---

(30) Priorität : **15.06.84 DE 3422302**

(43) Veröffentlichungstag der Anmeldung :
**22.01.86 Patentblatt 86/04**

(45) Bekanntmachung des Hinweises auf die Patenterteilung : **09.09.87 Patentblatt 87/37**

(84) Benannte Vertragsstaaten :
**AT CH DE FR GB IT LI NL**

(56) Entgegenhaltungen :
**EP-A- 0 079 519**
**EP-A- 0 093 370**
**DE-A- 2 830 536**
**GB-A- 1 397 943**
**GB-A- 2 103 513**

(73) Patentinhaber : **HOECHST AKTIENGESELLSCHAFT**
**Postfach 80 03 20**
**D-6230 Frankfurt am Main 80 (DE)**

(72) Erfinder : **Crass, Günther**
**Bachstrasse 7**
**D-6204 Taunusstein 4 (DE)**
Erfinder : **Hammerschmidt, Peter**
**Münzenbergstrasse 20**
**D-6200 Wiesbaden (DE)**
Erfinder : **Bursch, Annegrete**
**Gerichtsstrasse 9a**
**D-6220 Rüdesheim (DE)**

## Beschreibung

Die Erfindung bezieht sich auf ein druckempfindliches Klebeband, umfassend eine Trägerfolie aus koextrudierter, biaxial orientierter Polypropylenmehrschichtfolie und eine einseitig darauf aufgebrachte Klebstoffbeschichtung.

Klebebänder mit Polypropylenträgerfolien sind bereits bekannt und in der Literatur beschrieben. Die DE-OS 3 144 911 beschreibt ein Klebeband mit einer einschichtigen Trägerfolie aus Polypropylen, welchem zur Verbesserung der Haftung zu dem Klebstoff bestimmte Harze zugesetzt werden. Derartige Klebebänder lassen sich mitunter recht schwer von der Rolle abziehen.

Ein anderes Klebeband mit einer mehrschichtigen Trägerfolie auf Polypropylenbasis offenbart die DE-OS 3 216 603. Das dort beschriebene Klebeband soll sich aber durch eine besonders gute Delaminierbarkeit auszeichnen und besitzt daher eine Innenschicht mit bestimmten Teilchenzusätzen. Bei diesem Klebeband muß, um ein Delaminieren beim Abziehen von der Rolle zu vermeiden, zusätzlich auf der der Klebstoffbeschichtung abgewendeten Seite der Trägerfolie eine Klebstoff abweisende Beschichtung aufgebracht werden.

Der vorliegenden Erfindung liegt die Aufgabe zugrunde, ein Klebeband zu schaffen, das sich leicht von der Rolle abziehen läßt, das aber dazu keine zusätzliche Rückseitenbeschichtung benötigt.

Gelöst wird diese Aufgabe durch ein Klebeband der eingangs genannten Gattung, dessen kennzeichnende Merkmale darin zu sehen sind, daß die Trägerfolie aus mindestens zwei Schichten unterschiedlicher Zusammensetzung besteht, wobei die der Klebstoffbeschichtung abgewendete Schicht der Trägerfolie eine Schichtdicke von weniger als einem Drittel der Gesamtdicke des Klebebandes aufweist und wobei diese Schicht einen antiadhäsiven Wirkstoff enthält.

Insbesondere besteht die Trägerfolie aus zwei Schichten, wobei die der Klebstoffbeschichtung zugewendete Schicht eine größere Schichtdicke aufweist als die der Klebstoffbeschichtung gegenüberliegende Schicht. Die Trägerfolie ist durch Koextrusion hergestellt, und die Schicht mit der größeren Schichtdicke besteht aus einem Homo- oder Copolymeren des Propylens mit bis zu 10 Gew.-% Ethylenanteil. Zur Erhöhung der Festigkeit, des Elastizitätsmoduls oder der Zähigkeit der Trägerfolie kann die der Klebstoffbeschichtung zugewendete Schicht der Trägerfolie zusätzlich mit Harzen natürlicher oder synthetischer Art modifiziert sein. Derartige Harze sind z. B. nicht hydriertes Styrolpolymerisat, Methylstyrol-Copolymerisat, Pentadien-Polymerisate, α- oder β-Pinen-Polymerisate, Kolophonium oder Kolophoniumderivate oder bevorzugt Terpenpolymerisate sowie hydrierte oder partiell hydrierte Verbindungen von diesen oder ein α-Methylstyrol-Vinyltoluol-Copolymerisat. Es können auch gegebenenfalls Mischungen dieser Harze eingesetzt werden. Die Harze werden in einer Menge bis zu 25 Gew.-%, bezogen auf das Gewicht der Polymeren, die die Schicht der Trägerfolie bilden, welche der Klebstoffbeschichtung zugewendet ist, eingesetzt, bevorzugt zwischen 15 und 25 Gew.-%, und sie bewirken zusätzlich eine bessere Haftungsvermittlung zwischen der Klebstoffbeschichtung und der Trägerfolie. Zur weiteren Verbesserung der Haftvermittlung wird die Seite der Trägerfolie, die der Klebstoffbeschichtung zugewendet ist, zusätzlich bevorzugt bei der Herstellung der Trägerfolie einer Koronabehandlung unterworfen.

Die der Klebstoffbeschichtung abgewendete Schicht der Trägerfolie besteht ebenfalls aus Homo- oder Copolymeren des Propylens mit bis zu 10 Gew.-% Ethylenanteil, dieser Schicht werden aber bevorzugt keine Harze zugesetzt. Auf jeden Fall wird der Schicht aber ein antiadhäsiver Wirkstoff zugesetzt, und zwar in einer Menge von 0,2 bis 3 Gew.-%, bezogen auf das die Schicht bildende Polymere, bevorzugt von 0,3 bis 2 Gew.-%. Der antiadhäsive Wirkstoff ist dabei bevorzugt ein Polydiorganosiloxan, insbesondere ein Dimethylpolysiloxan mit einer kinematischen Viskosität von mindestens 100 mm$^2$/s bei 25 °C.

Die Dicke der gesamten Trägerfolie liegt zwischen 15 und 50 μm, bevorzugt zwischen 20 und 40 μm. Die Dicke der der Klebstoffbeschichtung abgewendeten Schicht der Trägerfolie liegt im Bereich zwischen 0,5 und 10 μm, bevorzugt zwischen 1,0 und 5,0 μm.

Als Klebstoffbeschichtung können die üblichen Kleber auf Kautschuk- oder Acrylatbasis verwendet werden, die in der Literatur umfassend beschrieben sind.

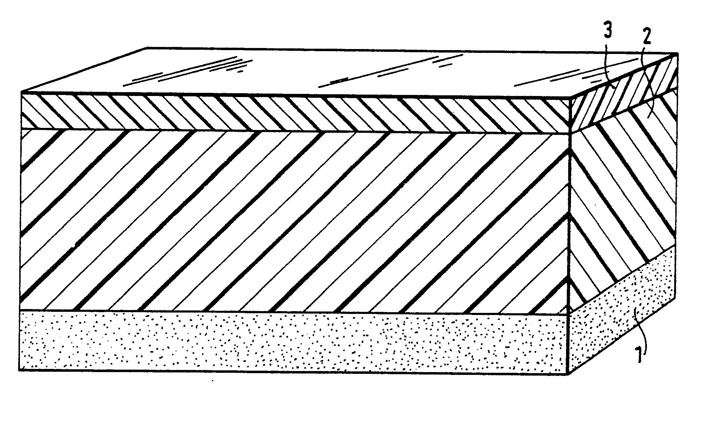

Die beigefügte Zeichnung zeigt einen Schnitt durch ein Klebeband gemäß der vorliegenden Erfindung. 1 stellt dabei die Klebstoffbeschichtung dar, 2 ist die der Klebstoffbeschichtung zugewendete Schicht der Trägerfolie, und 3 stellt die der Klebstoffbeschichtung abgewendete Schicht dar, in welcher sich der antiadhäsive Wirkstoff befindet.

Beispiel 1

Eine zweischichtige Trägerfolie mit einer Gesamtschichtdicke von 30 μm aus Propylen-Homopolymeren, deren eine Schicht eine Schichtdicke von 27 μm aufwies und deren andere Schicht eine Schichtdicke von 3 μm aufwies und zusätzlich 1,5 Gew.-% Dimethylpolysiloxan enthielt, wurde einseitig mit einem Kautschukkleber beschichtet, in Streifen von 25 mm Breite geschnitten und auf eine Rolle gewickelt. Es wurde dann mit einer Federwaage die Kraft gemessen, mit der das Klebeband von der Rolle abzuziehen war. Die Kraft betrug 4,2 Newton.

Beispiel 2, Vergleichsbeispiel

Eine einschichtige Trägerfolie aus Polypropylen wurde mit demselben Kleber wie in Beispiel 1 beschichtet, in Streifen von 25 mm geschnitten und aufgewickelt. Die Kraft, um dieses Klebeband von der Rolle abzuziehen, betrug 10,0 Newton.

**Patentansprüche**

1. Druckempfindliches Klebeband, umfassend eine Trägerfolie aus koextrudierter, biaxial orientierter Polypropylenmehrschichtfolie und eine einseitig darauf aufgebrachte Klebstoffbeschichtung, dadurch gekennzeichnet, daß die Trägerfolie aus mindestens zwei Schichten unterschiedlicher Zusammensetzung besteht, wobei die der Klebstoffbeschichtung abgewendete Schicht der Trägerfolie eine Schichtdicke von weniger als einem Drittel der Gesamtdicke des Klebebandes aufweist und einen antiadhäsiven Wirkstoff enthält.

2. Klebeband nach Anspruch 1, dadurch gekennzeichnet, daß die der Klebstoffbeschichtung zugewendete Schicht der Trägerfolie aus Homo- oder Copolymeren des Propylens mit bis zu 10 Gew.-% Ethylenanteil besteht, welchem zusätzlich Harze natürlicher oder synthetischer Art zugesetzt sind.

3. Klebeband nach Anspruch 2, dadurch gekennzeichnet, daß die Menge des Harzes bis zu 25 Gew.-% beträgt, bezogen auf das die Schicht bildende Polymere, bevorzugt zwischen 15 und 25 Gew.-% liegt.

4. Klebeband nach einem der Ansprüche 1 bis 3, dadurch gekennzeichnet, daß die der Klebstoffbeschichtung zugewendete Schicht der Trägerfolie auf der Klebstoffseite zur Verbesserung der Haftfähigkeit mit Koronaentladung behandelt ist.

5. Klebeband nach einem der Ansprüche 1 bis 4, dadurch gekennzeichnet, daß die der Klebstoffbeschichtung abgewendete Schicht der Trägerfolie aus Homo- oder Copolymeren von Propylen mit bis zu 10 Gew.-% Ethylenanteil besteht, welcher als antiadhäsiv wirkende Substanz ein Polydiorganosiloxan in einer Menge von 0,2 bis 3,0 Gew.-%, bevorzugt von 0,3 bis 2,0 Gew.-%, bezogen auf das die Schicht bildende Polymere, zugesetzt ist.

6. Klebeband nach einem der Ansprüche 1 bis 5, dadurch gekennzeichnet, daß der antiadhäsive Wirkstoff Dimethylpolysiloxan einer kinematischen Viskosität von mindestens 100 mm²/s bei 25 °C ist.

7. Klebeband nach einem der Ansprüche 1 bis 6, dadurch gekennzeichnet, daß die Dicke der Trägerfolie im Bereich zwischen 15 und 50 μm, bevorzugt zwischen 20 und 40 μm, liegt.

8. Klebeband nach einem der Ansprüche 1 bis 7, dadurch gekennzeichnet, daß die der Klebstoffbeschichtung abgewendete Schicht eine Schichtdicke aufweist im Bereich von 0,5 bis 10,0 μm, insbesondere zwischen 1,0 und 5,0 μm.

**Claims**

1. Pressure-sensitive adhesive tape comprising a support film formed of a coextruded, biaxially oriented multilayer polypropylene film and an adhesive coating applied to one surface of the film, wherein the support film comprises at least two layers of different compositions, the layer of the support film, which faces away from the adhesive coating, having a thickness of less than one third of the total thickness of the adhesive tape and containing an antiadhesive substance.

2. An adhesive tape as claimed in claim 1, wherein the layer of the support film, to which the adhesive coating is applied, comprises a homopolymer or copolymer of propylene containing an ethylene proportion of up to 10 % by weight and additionally being admixed with natural or synthetic resins.

3. An adhesive tape as claimed in claim 2, wherein the quantity of resin added amounts to up to 25 % by weight, preferably to 15 to 25 % by weight, based on the weight of the polymer forming the layer.

4. An adhesive tape as claimed in any of claims 1 to 3, wherein the surface of the layer of the support film, to which the adhesive coating is to be applied, is subjected to a corona discharge treatment in order to improve adhesion.

5. An adhesive tape as claimed in any of claims 1 to 4, wherein the layer of the support film, which faces away from the adhesive coating, comprises homopolymers or copolymers of propylene containing an ethylene proportion of up to 10 % by weight and is admixed with an antiadhesive substance comprising a polydiorganosiloxane in a quantity ranging from 0.2 to 3.0 % by weight, preferably from 0.3 to 2.0 % by weight, based on the weight of the polymer forming the layer.

6. An adhesive tape as claimed in any of claims 1 to 5, wherein the antiadhesive substance comprises a dimethylpolysiloxane having a kinematic viscosity of at least 100 mm²/s at 25 °C.

7. An adhesive tape as claimed in any of claims 1 to 6, wherein the support film has a thickness in the range between 15 and 50 μm, preferably between 20 to 40 μm.

8. An adhesive tape as claimed in any of claims 1 to 7, wherein the layer of the support film, which faces away from the adhesive coating, has a thickness in the range from 0.5 to 10.0 μm, particularly between 1.0 and 5.0 μm.

**Revendications**

1. Ruban adhésif sensible à la pression, comprenant une feuille de support constituée d'une feuille multicouches de polypropylène coextrudée, biaxialement orientée et d'un revêtement d'adhésif appliqué sur celle-ci d'un seul côté, caractérisé en ce que la feuille de support se compose d'au moins deux couches de composition différente, la couche de la feuille de support opposée au revêtement d'adhésif présentant une épaisseur de couche de moins d'un tiers de l'épaisseur totale du ruban adhésif et contenant une substance active antiadhésive.

2. Ruban adhésif suivant la revendication 1, caractérisé en ce que la couche de la feuille de support tournée vers le revêtement d'adhésif se compose d'un homo- ou d'un copolymère de propylène avec jusqu'à 10 % en poids d'éthylène, auquel on a ajouté en outre des résines naturelles ou synthétiques.

3. Ruban adhésif suivant la revendication 2, caractérisé en ce que la quantité de résine va jusqu'à 25 % en poids par rapport au polymère formant la couche, et est de préférence comprise entre 15 et 25 % en poids.

4. Ruban adhésif suivant l'une des revendications 1 à 3, caractérisé en ce que la couche de la feuille de support tournée vers le revêtement d'adhésif est traitée sur le côté adhésif par une décharge corona pour améliorer sa capacité d'adhérence.

5. Ruban adhésif suivant l'une des revendications 1 à 4, caractérisé en ce que la couche de la feuille de support opposée au revêtement d'adhésif est constituée d'un homopolymère ou d'un copolymère de propylène avec jusqu'à 10 % en poids d'éthylène et est additionnée comme substance antiadhésive d'un polydiorganosiloxane en une quantité de 0,2 à 3,0 % en poids, de préférence de 0,3 à 2,0 % en poids, par rapport au polymère formant la couche.

6. Ruban adhésif suivant l'une des revendications 1 à 5, caractérisé en ce que la substance active antiadhésive est un diméthylpolysiloxane ayant une viscosité cinématique d'au moins 100 mm²/s à 25 °C.

7. Ruban adhésif suivant l'une des revendications 1 à 6, caractérisé en ce que l'épaisseur de la feuille de support est comprise entre 15 et 50 μm, de préférence entre 20 et 40 μm.

8. Ruban adhésif suivant l'une des revendications 1 à 7, caractérisé en ce que la couche opposée au revêtement d'adhésif présente une épaisseur de 0,5 à 10,0 μm, en particulier de 1,0 à 5,0 μm.